# EUROPEAN PATENT SPECIFICATION

(11) **EP 4 628 349 B1**
(45) Date of publication and mention of the grant of the patent: **04.11.2026**
(21) Application number: 25197387.1
(22) Date of filing: 13.02.2019
(51) Int. Cl.: B60L 53/66, B60L 53/16, B60L 53/30, B60L 53/14, B60L 50/50

(54) **CHARGING CONTROL DEVICE FOR ELECTRIC VEHICLE**
LADESTEUERUNGSVORRICHTUNG FÜR EIN ELEKTROFAHRZEUG
DISPOSITIF DE COMMANDE DE CHARGE POUR VÉHICULE ÉLECTRIQUE

(30) Priority: 13.02.2018 KR 20180017829
(43) Date of publication of application: 08.10.2025
(62) Document number(s) of the earlier application(s) in accordance with Art. 76 EPC: 19754793.8 / 3 753 777
(73) Proprietor: LG INNOTEK CO., LTD., Seoul 07796 (KR)
(72) Inventor: KIM, Hyoung Dong, 04637 Seoul (KR)
(74) Representative: DREISS Patentanwälte PartG mbB

(56) References cited:
- EP-A1- 2 767 430
- EP-A1- 3 581 431
- DE-A1- 102013 210 061
- US-A1- 2017 361 791

## Description

### [Technical Field]

The embodiment relates to a charging control device and a charging control method for an electric vehicle.

### [Background Art]

EP 3 581 431 A1 discloses a charging control device for an electric vehicle in which a first controller detects a charging-related signal and activates a second controller that performs charging control operations. EP 2 767 430 A1 discloses a charging control apparatus for a vehicle, in which a controller operates in a sleep mode and a wake-up mode and responds to a pilot signal to control a charging process. US 2017/0361791 A1 discloses a battery management system including a wake-up input circuit configured to activate a control unit based on input signals and to control relay operation for managing power supply. DE 10 2013 210 061 A1 discloses an activation circuit for an onboard charger in which a control pilot signal is used to activate a charging device and a control unit is operated depending on the signal. Eco-friendly vehicles, such as an electric vehicle (EV) or a plug-in hybrid electric vehicle (PHEV), use an electric vehicle supply equipment (EVSE) installed at a supply to charge a battery.

To this end, an electric vehicle charging controller (EVCC) is mounted in the EV, communicates with the EV and the EVSE, and controls charging of the EV.

For example, when the EVCC receives a charging sequence signal for starting charging from the EVSE, it may control so as to start charging, and when the EVCC receives a charging sequence signal for stopping charging from the EVSE, it may control so as to end charging.

However, when the EV received the charging sequence signal, it had to operate an MCU of the EVCC at all times to start charging. The MCU of the EVCC consumes a significant amount of battery power. Accordingly, there was a problem that current is unnecessarily wasted until charging power is provided from the EVSE.

### [Technical Problem]

An embodiment has been devised to solve problems of the related art described above, and an object of the embodiment is to provide a charging control device and a charging control method for an electric vehicle.

In addition, the embodiment provides a charging control device and a charging control method of an electric vehicle that minimizes current consumed by the charging control device while the electric vehicle is not being charged.

### [Technical Solution]

The invention is as defined in claim 1.

In addition, a cycle of the first controller includes a first period and a second period, the first period is a period in which the first controller is in the sleep state, and the second period is a period in which the first controller is in the wake-up state.

Further, the first period is longer than the second period.

In addition, the charging control device further includes a coupler switch disposed between the opto-coupler and the first power supply and turned on/off according to the control of the first controller.

In addition, the first controller turns on/off the coupler switch periodically.

Further, a cycle of turning on/off the coupler switch and a cycle of the wake-up/sleep state of the first controller are the same.

### [Advantageous Effects]

Effects of a charging control device and a charging control method for an electric vehicle according to an embodiment will be described as follows.

In addition, the embodiment may minimize current consumed by the charge control device while the EV is not being charged.

In addition, the embodiment may minimize current in a sleep state of the MCU of the EVCC.

In addition, the embodiment may slow down a discharging speed of a battery.

The effects expected in the embodiment are not limited to the above-mentioned effects, and other effects not mentioned will be clearly understood by a person having an ordinary skill in the art to which the embodiment pertains, from the following descriptions.

### [Description of Drawings]

The accompanying drawings are to help understanding of the embodiment, and provide embodiments of the embodiment in conjunction with the detailed description. However, the technical features of the embodiment are not limited to specific drawings, and features disclosed in the drawings may combine with each other to form a new embodiment.
FIGS. 1 to 3 are views showing a charging system of an electric vehicle according to an embodiment.
FIG. 4 is a block diagram of a charging control device according to one embodiment.
FIG. 5 is an example of an operation scenario of a charging control device according to one embodiment.
FIG. 6 is a block diagram of a charging control device according to another embodiment.
FIG. 7 is an example of an operation scenario of a charging control device according to another embodiment.

### [Modes of the Invention]

Hereinafter, embodiments related to the present invention will be described in detail with reference to the accompanying drawings. The component suffixes "module" and "part" used in the following description are given or mixed together only considering the ease of creating the specification, and have no meanings or roles that are distinguished from each other by themselves.

Advantages and features of the present invention, and methods for achieving them will be apparent with reference to the embodiments described below in detail with reference to the accompanying drawings. However, the present invention is not limited to the embodiments disclosed below, but may be implemented in various forms, and only the embodiments of the present invention make the disclosure of the present invention complete, and are provided to fully convey the scope of the present invention to those skilled in the art to which the present invention belongs, and the present invention is defined only by the scope of the claims. Like reference numerals refer to like elements throughout the specification.

In describing the embodiments of the present invention, when it is determined that a detailed description of a well-known function or a configuration may unnecessarily obscure the scope of the present invention, the detailed description thereof will be omitted. Terms to be described below are terms defined in consideration of functions in the embodiments of the present invention, and may vary according to intentions or customs of users or operators. Therefore, the definition should be made based on the contents throughout the present specification.

Combinations of each block in the accompanying drawings and each step of the flowchart may be performed by computer program instructions. These computer program instructions may be mounted on a processor of a general purpose computer, a special purpose computer, or other programmable data processing equipment, and thus the instructions performed by the processor of the computer or other programmable data processing equipment create means for performing the functions described in each block of the drawing or each step of the flowchart. These computer program instructions may also be stored in a computer usable or computer readable memory capable of directing the computer or other programmable data processing equipment to implement a function in a particular manner, and thus the instructions stored in the computer usable or computer readable memory may also produce a manufactured item containing instruction means for performing the functions described in each block of the drawings or each step of the flowchart. The computer program instructions may also be mounted on the computer or other programmable data processing equipment, and thus the instructions for performing the computer or other programmable data processing equipment by performing a series of operating steps on the computer or other programmable data processing equipment to create a computer-implemented process, may also provide steps for performing the functions described in each block of the drawings and each step of the flowchart.

In addition, each block or each step may represent a module, segment or a portion of code that includes one or more executable instructions for performing specified logical function(s). It should also be noted that in some alternative embodiments, the functions noted in the blocks or steps may occur out of order. For example, two blocks or steps shown in succession may be performed substantially simultaneously, or the blocks or steps may sometimes be performed in reverse order depending on the corresponding function.

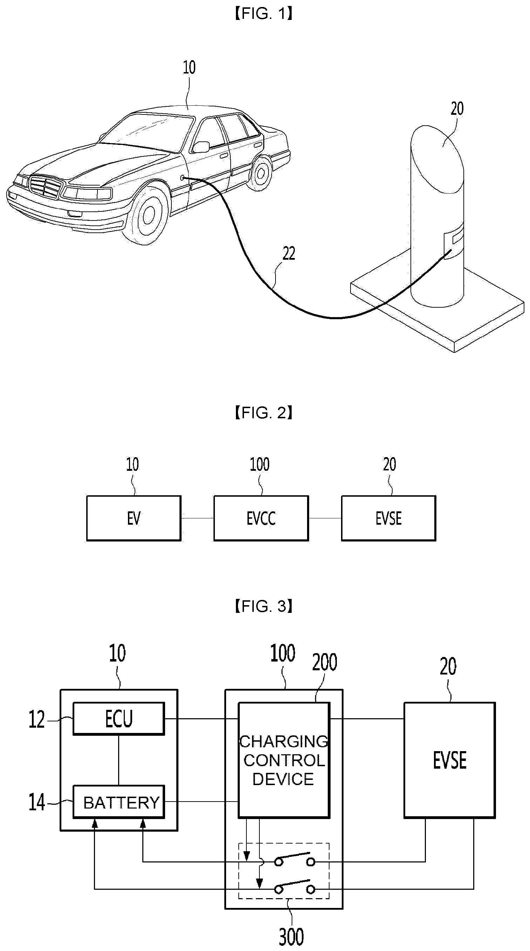

FIGS. 1 to 3 are views showing a charging system of an electric vehicle according to an embodiment.

Referring to FIGS. 1 to 3, an electric vehicle (EV) 10 may be charged by an electric vehicle supply equipment (EVSE) 20. To this end, a charging cable 22 connected to the EVSE 20 may be connected to an oil inlet port of the EV 10. Here, the EVSE 20 is an apparatus that supplies an alternating current (AC) or direct current (DC), and may be disposed at a supply or home, or may also be portably implemented. The EVSE 20 may also be referred to as a supply, an AC supply, a DC supply, a socket-outlet, or the like.

An electric vehicle charging controller (EVCC) 100 is mounted in the EV 10 and connected to the EV 10. For example, the EVCC 100 may be installed in a trunk of the EV 10, but is not limited thereto.

Here, the EVCC 100 may communicate with the EV 10 and the EVSE 20, respectively.

According to the embodiment, the EVCC 100 includes a charging control device 200 and a power supply 300.

The charging control device 200 is connected to the EV 10 and the EVSE 20, respectively. The charging control device 200 may be connected to the EV 10 and the EVSE 20 through a plurality of pins, respectively.

For example, the charging control device 200 may include 20 pins connected to the EVSE 20, and may communicate with the EVSE 20 through the 20 pins. For example, one among the 20 pins may be a pin for a control pilot (CP) port for receiving a CP signal from the EVSE 20, another one may be a pin for a proximity detection (PD) port for detecting whether a connector of the charging cable is in proximity, still another one may be a pin for a charge sequence (CS) port for receiving a CS signal from the EVSE 20, and still another one is may be a pin for a protective earth (PE) port connected to a ground of the EVSE 20. Another one among the 20 pins may be a pin for driving a motor to open a flap of an inlet port, still another one may be a pin for sensing the motor, still another one may be a pin for sensing a temperature, still another one may be a pin for sensing a light-emitting diode (LED), and still another one may be a pin for controller area network (CAN) communication. However, a number and function of the pins are not limited thereto, and may be variously modified.

In addition, the charging control device 200 may include 12 pins connected to the EV 10, and may communicate with the EV 10 through the 12 pins. For example, one among the 12 pins may be a pin for a voltage line applied from a collision detection sensor in the EV 10, another one may be a battery pin in the EV 10, still another one may be a pin for may communication, still another one may be a pin connected to a ground, and still another one may be a pin for high voltage protection. However, a number and function of the pins are not limited thereto, and may be variously modified.

Two high voltage lines of the EVSE 20 supply power to a battery 14 of the EV 10 by the power supply 300 of the EVCC 100, and at this time, turn-on and turn-off of the high voltage lines may be controlled by the charging control device 200.

That is, the charging control device 200 may communicate with an electric controller (ECU) 12 of the EV 10, and may control the power supply 300 that transmits the power supplied from the EVSE 20 to the battery 12 of the EV 10 according to signals received from the EV 10 and the EVSE 20, respectively.

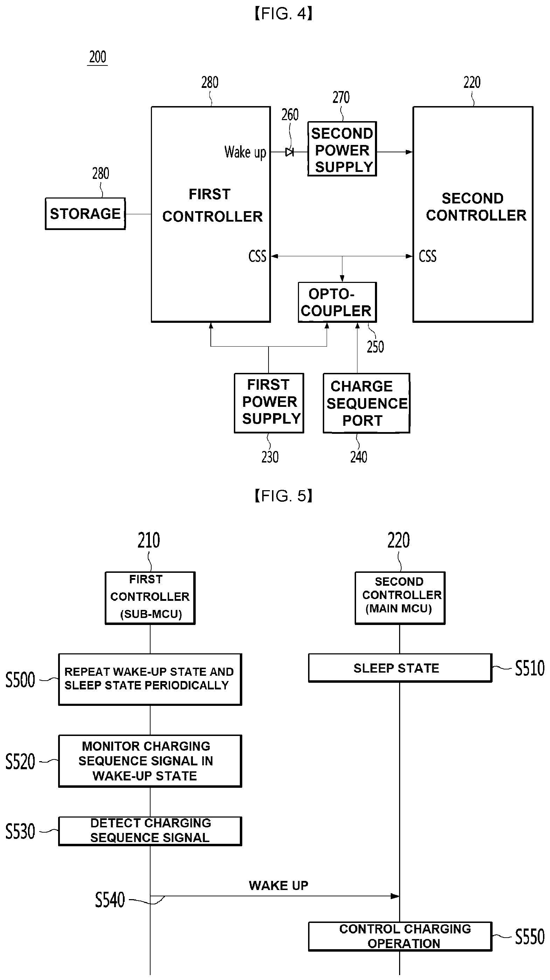

FIG. 4 is a block diagram of a charging control device according to one embodiment.

Referring to FIG. 4, a charging control device 200 according to one embodiment may include a first controller 210 and a second controller 220. In the present specification, the first controller 210 may be referred to as a submicrocontroller (sub-MCU), an auxiliary controller, an auxiliary controller, and the like, and the second controller 220 may be referred to as a main microcontroller (main MCU), a primary controller, and a primary controller. Here, the MCU may refer to a computer in which a microprocessor and input and output modules are integrated in one chip to perform a predetermined function. When the MCU is applied in a vehicle, it may be implemented as a device such as an electronic controller (ECU), and an automobile engine, an automatic transmission, and various parts of an anti-lock braking system (ABS) may be controlled by the computer. The MCU according to one embodiment may be applied in the charging control device 200 for charging the EV, and may be divided into the sub-MCU and the main MCU.

In general, the MCU applied in the charging control device 200 controls the charging of the EV as a whole, and thus power consumption may be increased. Since the MCU uses a battery voltage of the EV, the power consumption of the MCU may be a very big issue. According to the embodiment to solve such an issue, the sub-MCU which is the first controller 210 may be a unit that is separated from the main MCU which is the second controller 220. The first controller 210 may operate the second controller 220 from a sleep state that does not consume current to a wake-up state, and when operating in the wake-up state, the second controller 220 may use the battery voltage to perform overall charging control.

The first controller 210 periodically detects a charging sequence signal, and when the charging sequence signal is detected, the second controller 220 may operate from the sleep state to the wake-up state. More specifically, the first controller 210 may repeat the wake-up state and the sleep state periodically. A cycle may be set arbitrarily. In addition, the cycle may include a first period and a second period. The first period may be a period in which the first controller 210 is in the sleep state. The second period may be a period in which the first controller 220 is in the wake-up state. The first period may be larger than the second period. For example, the first period may be 500ms and the second period may be 50ms. In addition, the first controller 210 does not drive during the first period which is the sleep state, and may not perform an operation of detecting the charging sequence signal. That is, the first controller 210 may not consume current during the first period. The first controller 210 may be driven based on a first driving voltage of a first power supply 230 during the second period which is the wake-up state, and may perform an operation of detecting a charging sequence signal (CSS) provided by an opto-coupler 250. That is, the first controller 210 may consume current during the second period. In addition, when the first controller 210 detects the CSS while operating during the second period of one cycle, the first controller 210 may generate a wake-up signal for waking up the second controller 220. The first controller 1210 may provide the wake-up signal to a second power supply 270.

The second controller 220 may be in a sleep state before starting the charging control. The second controller 220 may not consume current in the sleep state. The second controller 220 may operate in a wake-up state when the first controller 210 generates the wake-up signal, and may perform an operation for controlling charging of the EV as a whole. The second controller 220 may consume current in the wake-up state. More specifically, when the first controller 2210 generates the wake-up signal, the wake-up signal may activate the second power supply 270. The activated second power supply 270 may provide a second driving voltage to the second controller 220, and the second controller 220 may operate in the wake-up state by the second driving voltage. In addition, the second controller 220 may confirm the CSS provided by the opto-coupler 250 when entering the wake-up state to perform the charge control operation.

The charging control device 200 according to one embodiment may include the first power supply 230. The first power supply 230 may provide the first driving voltage to the first controller 210 based on power provided from a battery 14. In addition, the first power supply 230 may provide the first driving voltage to the opto-coupler 250 based on the power provided from the battery 14.

The charging control device 200 according to one embodiment may include a charge sequence port 240. The charge sequence port 240 may receive the CSS from a charge cable.

The charging control device 200 according to one embodiment includes the opto-coupler 250. The opto-coupler 250 may operate based on the first driving voltage provided from the first power supply 230. An opto-coupler may be referred to as a photo coupler. The opto-coupler includes a light-emitting diode and a phototransistor, and the light-emitting diode emits light when a current is applied to the light-emitting diode. The phototransistor may receive the light emitted by the light-emitting diode to become conductive. Using such a principle, when the CSS provided from the charge sequence port 240 is sensed, the opto-coupler 250 provides the CSS to the first controller 210. In addition, when the CSS provided from the charge sequence port 240 is sensed, the opto-coupler 250 provides the CSS to the second controller 220.

The charging control device 200 according to one embodiment may include may include a diode 260. The diode 260 may be disposed between the first controller 210 and the second power supply 270. The diode 260 enables the wake-up signal provided from the first controller 210 to be provided to the second power supply 1270. In addition, the diode 260 may prevent a current generated at the second power supply 270 from flowing into the first controller 210.

The charging control device 200 according to one embodiment may include may include a storage 280. The storage 280 may include information related to a cycle of the first controller 210. That is, the storage 1280 may store the cycle information and information of the first period and the second period during one cycle.

Therefore, the embodiment may minimize current consumed by the charge control device while the EV is not being charged. Further, the embodiment may minimize current in the sleep state of the MCU of the EVCC. Furthermore, the embodiment may slow down the discharging speed of the battery.

FIG. 5 is an example of an operation scenario of a charging control device according to one embodiment.

Referring to FIG. 5, in a state in which charging of the EV 10 is not started, the first controller 210 which is the sub-MCU, may repeat the wake-up state and the sleep state periodically (S500), and the second controller 220 which is the main MCU may be in the sleep state (S510). Accordingly, it is possible to reduce power consumption in the sub-MCU and prevent unnecessary power consumption in the main MCU.

The first controller 210 may monitor the CSS in the wake-up state (S520). When the first controller 210 detects the CSS, the first controller 210 may wake up the second controller 220 (S530 and S540).

The second controller 220 may control the charging operation when in the wake-up state (S550).

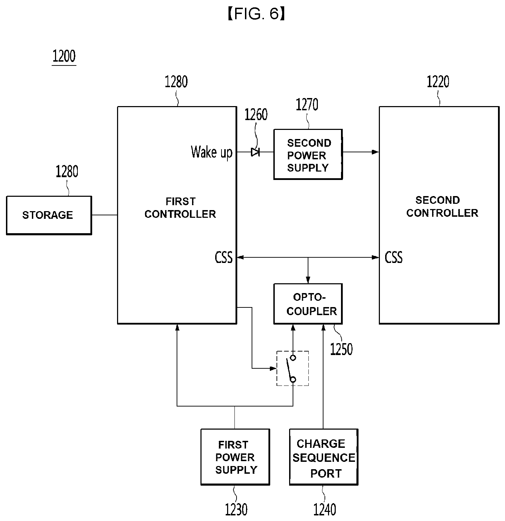

FIG. 6 is a block diagram of a charging control device according to another embodiment.

Referring to FIG. 6, a charging control device 1200 according to another embodiment may include a first controller 1210 and a second controller 1220. In the present specification, the first controller 1210 may be referred to as a submicrocontroller (sub-MCU), an auxiliary controller, an auxiliary controller, and the like, and the second controller 1220 may be referred to as a main microcontroller (main MCU), a primary controller, and a primary controller. Here, the MCU may refer to a computer in which a microprocessor and input and output modules are integrated in one chip to perform a predetermined function. When the MCU is applied in a vehicle, it may be implemented as a device such as an electronic controller (ECU), and an automobile engine, an automatic transmission, and various parts of an anti-lock braking system (ABS) may be controlled by the computer. The MCU according to one embodiment may be applied in the charging control device 1200 for charging the EV, and may be divided into the sub-MCU and the main MCU.

In general, the MCU applied in the charging control device 1200 controls the charging of the EV as a whole, and thus power consumption may be increased. Since the MCU uses a battery voltage of the EV, the power consumption of the MCU may be a very big issue. According to the embodiment to solve such an issue, the sub-MCU which is the first controller 1210 may be a unit that is separated from the main MCU which is the second controller 1220. The first controller 1210 may operate the second controller 1220 from a sleep state that does not consume current to a wake-up state, and when operating in the wake-up state, the second controller 1220 may use the battery voltage to perform overall charging control.

The first controller 1210 periodically detects a charging sequence signal, and when the charging sequence signal is detected, the second controller 1220 may operate from the sleep state to the wake-up state. More specifically, the first controller 1210 may repeat the wake-up state and the sleep state periodically. A cycle may be set arbitrarily. In addition, the cycle may include a first period and a second period. The first period may be a period in which the first controller 1210 is in the sleep state. The second period may be a period in which the first controller 1210 is in the wake-up state. The first period may be larger than the second period. For example, the first period may be 500ms and the second period may be 50ms. In addition, the first controller 1210 does not drive during the first period which is the sleep state, and may not perform an operation of detecting the charging sequence signal. That is, the first controller 1210 may not consume current during the first period. The first controller 1210 may be driven based on a first driving voltage of a first power supply 1230 during the second period which is the wake-up state, and may perform an operation of detecting a charging sequence signal (CSS) provided by an opto-coupler 1250. That is, the first controller 1210 may consume current during the second period. In addition, when the first controller 1210 detects the CSS while operating during the second period of one cycle, the first controller 1210 may generate a wake-up signal for waking up the second controller 1220. The first controller 1210 may provide the wake-up signal to a second power supply 1270. Further, the first controller 1210 may wake up the opto-coupler 1250 periodically. As an example, the cycle in which the first controller 1210 repeats the wake-up state and the sleep state and a cycle in which the opto-coupler 1250 repeats the wake-up state and the sleep state may be the same. That is, the first controller 1210 may wake up the opto-coupler 1250 in the first period, and may sleep the opto-coupler 1250 in the second period. As another example, the first controller 1210 may wake up the opto-coupler 1250 after a predetermined time has passed after being waked up in the first period, and may sleep the opto-coupler 1250 before a predetermined time at which the second period comes. In addition, the first controller 1210 may turn on a coupler switch 1290 to wake up the opto-coupler 1250. Further, the first controller 1210 may provide a coupler switch signal (SW) to the coupler switch 1290 to turn off the coupler switch 1290 in order to sleep the opto-coupler 1250. Therefore, the opto-coupler 1250 operates only while it is periodically waked up, so that current consumption is reduced.

Preferably, the first controller 1210 may turn on the coupler switch 1290 at a time of starting the operation in the wake-up state, and may turn off the coupler switch 1290 before a time of ending the wake-up state (before a time of starting the sleep state).

The second controller 1220 may be in a sleep state before starting the charging control. The second controller 1220 may not consume current in the sleep state. The second controller 1220 may operate in a wake-up state when the first controller 1210 generates the wake-up signal, and may perform an operation for controlling charging of the EV as a whole. The second controller 1220 may consume current in the wake-up state. More specifically, when the first controller 12210 generates the wake-up signal, the wake-up signal may activate the second power supply 1270. The activated second power supply 1270 may provide a second driving voltage to the second controller 1220, and the second controller 1220 may operate in the wake-up state by the second driving voltage. In addition, the second controller 1220 may confirm the CSS provided by the opto-coupler 1250 when entering the wake-up state to perform the charge control operation.

The charging control device 1200 according to another embodiment may include the first power supply 1230. The first power supply 1230 may provide the first driving voltage to the first controller 1210 based on power provided from a battery 14. In addition, the first power supply 1230 may provide the first driving voltage to the coupler switch 1290 based on the power provided from the battery 14.

The charging control device 1200 according to another embodiment may include a charge sequence port 1240. The charge sequence port 1240 may receive the CSS from a charge cable.

The charging control device 200 according to another embodiment may include the coupler switch 1290. The coupler switch 1290 may be disposed between the opto-couplers 1250 in the first power supply 1230. The coupler switch 1290 may be turned on or off based on the SW of the first controller 1210. As an example, the coupler switch 1290 is turned on when the SW for turning it on is input, and may provide the first driving voltage provided by the first power supply 1230 to the opto-coupler 1250. The coupler switch 1290 is turned off when the SW for turning it off is input, and may block such that the first driving voltage provided by the first power supply 1230 is not provided to the opto-coupler 1250.

The charging control device 1200 according to another embodiment ncludes the opto-coupler 1250. The opto-coupler 1250 may operate based on the first driving voltage provided from the first power supply 1230. An opto-coupler may be referred to as a photo coupler. The opto-coupler includes a light-emitting diode and a phototransistor, and the light-emitting diode emits light when a current is applied to the light-emitting diode. The phototransistor may receive the light emitted by the light-emitting diode to become conductive. Using such a principle, when the CSS provided from the charge sequence port 1240 is sensed, the opto-coupler 1250 provides the CSS to the first controller 1210. In addition, the opto-coupler 1250 may be waked up periodically by the control of the first controller 1210. When the CSS provided by the charge sequence port 1240 is sensed while in the wake-up state, that is, while the first driving voltage is being provided, the opto-coupler 1250 provides the CSS to the second controller 1220.

The charging control device 1200 according to another embodiment may include a diode 1260. The diode 1260 may be disposed between the first controller 1210 and the second power supply 1270. The diode 1260 enables the wake-up signal provided from the first controller 1210 to be provided to the second power supply 1270. In addition, the diode 1260 may prevent a current generated at the second power supply 1270 from flowing into the first controller 1210.

The charging control device 1200 according to another embodiment may include a storage 1280. The storage 1280 may include information related to a cycle of the first controller 1210. That is, the storage 1280 may store the cycle information of the first controller 1210 and information of the first period and the second period during one cycle. In addition, the storage 1280 may include information regarding a cycle of the opto-coupler 1250. That is, the storage 1280 may store the cycle information of the opto-coupler 1210 and the information of the first period and the second period during one cycle.

Therefore, the embodiment may minimize current consumed by the charge control device while the EV is not being charged. Further, the embodiment may minimize current in the sleep state of the MCU of the EVCC. Furthermore, the embodiment may slow down the discharging speed of the battery.

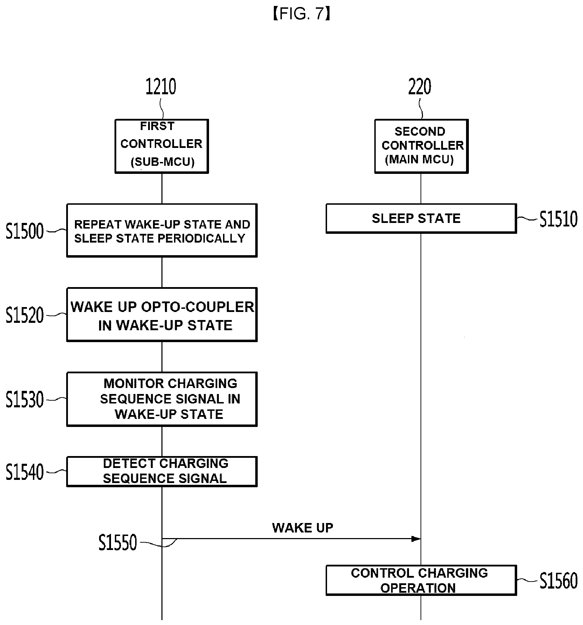

FIG. 7 is an example of an operation scenario of a charging control device according to another embodiment.

Referring to FIG. 7, in a state in which charging of the EV 10 is not started, the first controller 1210 which is the sub-MCU may repeat the wake-up state and the sleep state periodically (S1500), and the second controller 1220 which is the main MCU may be in the sleep state (S1510). Accordingly, it is possible to reduce power consumption in the sub-MCU and prevent unnecessary power consumption in the main MCU.

The first controller 1210 may wake up the opto-coupler in the wake-up state (S1520). Accordingly, power consumption of the opto-coupler may be reduced.

The first controller 1210 may monitor the CSS in the wake-up state (S1530).

When the first controller 1210 detects the CSS, the first controller 1210 may wake up the second controller 1220 (S540 and S550).

The second controller 1220 may control the charging operation when in the wake-up state (S1560).

According to one embodiment, the above-described method may be implemented as a processor readable code in a medium in which a program is recorded. Examples of a processor readable medium include a ROM, a RAM, a CD-ROM, a magnetic tape, a floppy disk, an optical data storage system, and the like, and include what is implemented in the form of carrier waves (for example, transmission through the Internet).

The embodiments described as above are not applicable to be limited to the configurations and methods described, and the embodiments may be configured by selectively combining all or some of the embodiments so that various modifications may be made.

In addition, preferred embodiments of the present invention are shown and described above, but the present invention is not limited to the specific embodiments described above, of course, various modifications may be made by those skilled in the art to which the invention belongs without departing from the scope of the present invention claimed in the claims.

## Claims

1. A charging control device (200, 1200) of an electric vehicle (10) comprising:
a charge sequence port (240, 1240) to which a charging sequence signal is input from a connector of a charging cable (22);
a first power supply (230, 1230) configured to provide a first supply voltage;
a first controller (210, 1210) driven based on the first supply voltage, configured to periodically repeat a wake-up state and a sleep state, and to generate a wake-up signal during its wake-up state when the charging sequence signal is input to the charge sequence port (240, 1240);
a second controller (220, 1220) configured to operate in a wake-up state and a sleep state, and to control a charging operation of the electric vehicle (10) in its wake-up state;
a second power supply (270, 1270) disposed between the first controller (210, 1210) and the second controller (220, 1220), and configured to provide a second supply voltage to the second controller (220, 1220) when the wake-up signal is generated and provided by the first controller (210, 1210);
a diode (260, 1260) disposed between the first controller (210, 1210) and the second power supply, the diode (260, 1260) is configured to enable the wake-up signal provided from the first controller (210, 1210) to be provided to the second power supply (270, 1270) and prevent a current generated at the second power supply (270, 1270) from flowing into the first controller (210, 1210); and
an opto-coupler (250, 1250) disposed between the charge sequence port (240, 1240) and the first power supply (230, 1230) and driven based on the first supply voltage to receive the charging sequence signal,
wherein the second controller (220, 1220) does not consume current in its sleep state,
wherein the charging sequence signal is provided to the first and second controllers (210, 220) via the opto-coupler (250, 1250),
wherein the first controller (210, 1210) is configured to periodically repeat its wake-up state and its sleep state in a state in which the second controller (220, 1220) operates in its sleep state.

2. The charging control device (200, 1200) of claim 1, wherein the first controller (210, 1210) includes a first period which is a period operating in the sleep state, and a second period which is a period operating in the wake-up state, and
wherein the first period is longer than the second period.

3. The charging control device (200, 1200) of claim 1, wherein the opto-coupler (250, 1250) is configured to provide the charging sequence signal to the first controller (210, 1210) when the charging sequence signal is input in the wake-up state of the first controller(210, 1210).

4. The charging control device (200, 1200) of claim 1, wherein the opto-coupler (250, 1250) is configured to provide the charging sequence signal to the second controller (220, 1220) when the charging sequence signal is input in the wake-up state of the second controller (220, 1220).

5. The charging control device (200, 1200) of claim 1, comprising
a coupler switch (290, 1290) disposed between the opto-coupler (250, 1250) and the first power supply (230, 1230) and turned on/off according to the control of the first controller (210, 1210).

6. The charging control device (200, 1200) of claim 5, wherein the first controller (210, 1210) is configured to turn on/off the coupler switch (290, 1290) periodically.

7. The charging control device (200, 1200) of claim 5, wherein a cycle of turning on/off the coupler switch (290, 1290) and a cycle of the wake-up/sleep state of the first controller (210, 1210) are the same.

8. The charging control device (200, 1200) of claim 5, wherein the first controller (210, 1210) is configured to turn on the coupler switch (290, 1290) at a time of starting the operation in the wake-up state, and to turn off the coupler switch (290, 1290) before a time of ending the wake-up state.

9. The charging control device (200, 1200) of claim 1, wherein the second controller (220, 1220) is an electronic controller (ECU) of the electric vehicle (10), and configured to control one or more of a motor of the electric vehicle (10), a braking system of the electric vehicle (10) and a transmission of the electric vehicle (10), and
wherein the first controller (210, 1210) is an auxiliary controller configured to wake up the ECU of the electric vehicle (10).

10. The charging control device (200, 1200) of claim 1, wherein the first controller (210, 1210) is configured to provide the charging sequence signal to both of the second controller (220, 1220) and the opto-coupler (250, 1250).

11. The charging control device (200, 1200) of claim 1,
wherein the first controller (210, 1210) is connected between the second power supply (270, 1270) and the first power supply (230, 1230).

## Patentansprüche

1. Ladesteuervorrichtung (200, 1200) eines Elektrofahrzeugs (10), umfassend:
einen Ladesequenzanschluss (240, 1240), in den ein Ladesequenzsignal von einem Verbinder eines Ladekabels (22) eingegeben wird;
eine erste Energieversorgung (230, 1230), die konfiguriert ist, um eine erste Versorgungsspannung bereitzustellen;
eine erste Steuereinrichtung (210, 1210), die basierend auf der ersten Versorgungsspannung angesteuert wird, die konfiguriert ist, um einen Aufwachzustand und einen Schlafzustand periodisch zu wiederholen und um während ihres Aufwachzustands ein Aufwachsignal zu erzeugen, wenn das Ladesequenzsignal in den Ladesequenzanschluss (240, 1240) eingegeben wird;
eine zweite Steuereinrichtung (220, 1220), die konfiguriert ist, um in einem Aufwachzustand und einem Schlafzustand in Betrieb zu sein und um einen Ladebetrieb des Elektrofahrzeugs (10) in ihrem Aufwachzustand zu steuern;
eine zweite Energieversorgung (270, 1270), die zwischen der ersten Steuereinrichtung (210, 1210) und der zweiten Steuereinrichtung (220, 1220) angeordnet und konfiguriert ist, um der zweiten Steuereinrichtung (220, 1220) eine zweite Versorgungsspannung bereitzustellen, wenn das Aufwachsignal durch die erste Steuereinrichtung (210, 1210) erzeugt wird;
eine Diode (260, 1260), die zwischen der ersten Steuerung (210, 1210) und der zweiten Energieversorgung angeordnet ist, wobei die Diode (260, 1260) konfiguriert ist, um zu ermöglichen, dass das von der ersten Steuerung (210, 1210) bereitgestellte Aufwachsignal der zweiten Leistungsversorgung (270, 1270) bereitgestellt wird, und zu verhindern, dass ein an der zweiten Energieversorgung (270, 1270) erzeugter Strom in die erste Steuereinrichtung (210, 1210) fließt; und
einen Optokoppler (250, 1250), der zwischen dem Ladesequenzanschluss (240, 1240) und der ersten Energieversorgung (230, 1230) angeordnet ist und basierend auf der ersten Versorgungsspannung angesteuert wird, um das Ladesequenzsignal zu empfangen,
wobei die zweite Steuereinrichtung (220, 1220) in ihrem Ruhezustand keinen Strom verbraucht,
wobei das Ladesequenzsignal über den Optokoppler (250, 1250) der ersten und der zweiten Steuereinrichtung (210, 220) bereitgestellt wird,
wobei die erste Steuereinrichtung (210, 1210) konfiguriert ist, um ihren Aufwachzustand und ihren Schlafzustand in einem Zustand periodisch zu wiederholen, in dem die zweite Steuereinrichtung (220, 1220) in ihrem Schlafzustand in Betrieb ist.

2. Ladesteuervorrichtung (200, 1200) nach Anspruch 1, wobei die erste Steuereinrichtung (210, 1210) eine erste Periode einschließt, die eine Periode ist, die in dem Schlafzustand in Betrieb ist, und eine zweite Periode, die eine Periode ist, die in dem Aufwachzustand in Betrieb ist, und
wobei die erste Periode länger als die zweite Periode ist.

3. Ladesteuervorrichtung (200, 1200) nach Anspruch 1, wobei der Optokoppler (250, 1250) konfiguriert ist, um das Ladesequenzsignal der ersten Steuereinrichtung (210, 1210) bereitzustellen, wenn das Ladesequenzsignal in dem Aufwachzustand der ersten Steuereinrichtung (210, 1210) eingegeben wird.

4. Ladesteuervorrichtung (200, 1200) nach Anspruch 1, wobei der Optokoppler (250, 1250) konfiguriert ist, um das Ladesequenzsignal der zweiten Steuereinrichtung (220, 1220) bereitzustellen, wenn das Ladesequenzsignal in dem Aufwachzustand der zweiten Steuereinrichtung (220, 1220) eingegeben wird.

5. Ladesteuervorrichtung (200, 1200) nach Anspruch 1, umfassend
einen Kopplerschalter (290, 1290), der zwischen dem Optokoppler (250, 1250) und der ersten Energieversorgung (230, 1230) angeordnet ist und gemäß der Steuerung der ersten Steuereinrichtung (210, 1210) ein-/ausgeschaltet wird.

6. Ladesteuervorrichtung (200, 1200) nach Anspruch 5, wobei die erste Steuereinrichtung (210, 1210) konfiguriert ist, um den Kopplerschalter (290, 1290) periodisch ein- und auszuschalten.

7. Ladesteuervorrichtung (200, 1200) nach Anspruch 5, wobei ein Zyklus eines Ein-/Ausschaltens des Kopplerschalters (290, 1290) und ein Zyklus des Aufwach/Schlafzustands der ersten Steuereinrichtung (210, 1210) gleich sind.

8. Ladesteuervorrichtung (200, 1200) nach Anspruch 5, wobei die erste Steuereinrichtung (210, 1210) konfiguriert ist, um den Kopplerschalter (290, 1290) zu einem Zeitpunkt eines Beginnens des Betriebs in dem Aufwachzustand einzuschalten und um den Kopplerschalter (290, 1290) vor einem Zeitpunkt eines Beendens des Aufwachzustands auszuschalten.

9. Ladesteuervorrichtung (200, 1200) nach Anspruch 1, die zweite Steuereinrichtung (220, 1220) eine elektronische Steuereinrichtung (ECU) des Elektrofahrzeugs (10) ist und konfiguriert ist, um eines oder mehrere eines Motors des Elektrofahrzeugs (10), eines Bremssystems des Elektrofahrzeugs (10) und eines Getriebes des Elektrofahrzeugs (10) zu steuern, und
wobei die erste Steuereinrichtung (210, 1210) eine Hilfssteuerung ist, die konfiguriert ist, um die ECU des Elektrofahrzeugs (10) aufzuwecken.

10. Ladesteuervorrichtung (200, 1200) nach Anspruch 1, wobei die erste Steuereinrichtung (210, 1210) konfiguriert ist, das Ladesequenzsignal sowohl der zweiten Steuereinrichtung (220, 1220) als auch dem Optokoppler (250, 1250) bereitzustellen.

11. Ladesteuervorrichtung (200, 1200) nach Anspruch 1, wobei die erste Steuerung (210, 1210) zwischen der zweiten Energieversorgung (270, 1270) und der ersten Energieversorgung (230, 1230) angeschlossen ist.

## Revendications

1. Un dispositif de commande de charge (200, 1200) d'un véhicule électrique (10), comprenant :
un port de séquence de charge (240, 1240) auquel un signal de séquence de charge est transmis par un connecteur d'un câble de charge (22) ;
une première alimentation (230, 1230) configurée pour fournir une première tension d'alimentation ;
un premier contrôleur (210, 1210) piloté sur la base de la première tension d'alimentation, configuré pour répéter périodiquement un état de réveil et un état de veille, et pour générer un signal de réveil pendant son état de réveil lorsque le signal de séquence de charge est appliqué au port de séquence de charge (240, 1240) ;
un second contrôleur (220, 1220) configuré pour fonctionner dans un état de réveil et un état de veille, et pour commander une opération de charge du véhicule électrique (10) dans son état de réveil ;
une seconde alimentation (270, 1270) disposée entre le premier contrôleur (210, 1210) et le second contrôleur (220, 1220), et configurée pour fournir une seconde tension d'alimentation au second contrôleur (220, 1220) lorsque le signal de réveil est généré et fourni par le premier contrôleur (210, 1210) ;
une diode (260, 1260) disposée entre le premier contrôleur (210, 1210) et la seconde alimentation, la diode (260, 1260) étant configurée pour permettre au signal de réveil fourni par le premier contrôleur (210, 1210) d'être fourni à la seconde alimentation (270, 1270) et empêcher un courant généré par la seconde alimentation (270, 1270) de circuler vers le premier contrôleur (210, 1210) ; et
un optocoupleur (250, 1250) disposé entre le port de séquence de charge (240, 1240) et la première alimentation (230, 1230) et piloté sur la base de la première tension d'alimentation pour recevoir le signal de séquence de charge,
dans lequel le second contrôleur (220, 1220) ne consomme pas de courant dans son état de veille,
dans lequel le signal de séquence de charge est fourni aux premier et second contrôleurs (210, 220) par l'intermédiaire de l'optocoupleur (250, 1250),
dans lequel le premier contrôleur (210, 1210) est configuré pour répéter périodiquement son état de réveil et son état de veille alors que le second contrôleur (220, 1220) fonctionne dans son état de veille.

2. Le dispositif de commande de charge (200, 1200) selon la revendication 1, dans lequel le premier contrôleur (210, 1210) comprend une première période qui est une période de fonctionnement à l'état de veille, et une seconde période qui est une période de fonctionnement à l'état de réveil, et
dans lequel la première période est plus longue que la seconde période.

3. Le dispositif de commande de charge (200, 1200) selon la revendication 1, dans lequel l'optocoupleur (250, 1250) est configuré pour fournir le signal de séquence de charge au premier contrôleur (210, 1210) lorsque le signal de séquence de charge est reçu alors que le premier contrôleur (210, 1210) est dans son état de réveil.

4. Le dispositif de commande de charge (200, 1200) selon la revendication 1, dans lequel l'optocoupleur (250, 1250) est configuré pour fournir le signal de séquence de charge au second contrôleur (220, 1220) lorsque le signal de séquence de charge est reçu alors que le second contrôleur (220, 1220) est dans son état de réveil.

5. Le dispositif de commande de charge (200, 1200) selon la revendication 1, comprenant
un interrupteur de couplage (290, 1290) disposé entre l'optocoupleur (250, 1250) et la première alimentation (230, 1230), et activé/désactivé selon la commande du premier contrôleur (210, 1210).

6. Le dispositif de commande de charge (200, 1200) selon la revendication 5, dans lequel le premier contrôleur (210, 1210) est configuré pour activer/désactiver périodiquement l'interrupteur de couplage (290, 1290).

7. Le dispositif de commande de charge (200, 1200) selon la revendication 5, dans lequel un cycle d'activation/désactivation de l'interrupteur de couplage (290, 1290) et un cycle de l'état de réveil/de veille du premier contrôleur (210, 1210) sont identiques.

8. Le dispositif de commande de charge (200, 1200) selon la revendication 5, dans lequel le premier contrôleur (210, 1210) est configuré pour activer l'interrupteur de couplage (290, 1290) au moment du démarrage du fonctionnement à l'état de réveil, et pour désactiver l'interrupteur de couplage (290, 1290) avant la fin de l'état de réveil.

9. Le dispositif de commande de charge (200, 1200) selon la revendication 1, dans lequel le second contrôleur (220, 1220) est un contrôleur électronique (ECU) du véhicule électrique (10), et est configuré pour commander un ou plusieurs éléments parmi un moteur du véhicule électrique (10), un système de freinage du véhicule électrique (10) et une transmission du véhicule électrique (10), et
dans lequel le premier contrôleur (210, 1210) est un contrôleur auxiliaire configuré pour réveiller l'ECU du véhicule électrique (10).

10. Le dispositif de commande de charge (200, 1200) selon la revendication 1, dans lequel le premier contrôleur (210, 1210) est configuré pour fournir le signal de séquence de charge à la fois au second contrôleur (220, 1220) et à l'optocoupleur (250, 1250).

11. Le dispositif de commande de charge (200, 1200) selon la revendication 1,
dans lequel le premier contrôleur (210, 1210) est connecté entre la seconde alimentation (270, 1270) et la première alimentation (230, 1230).
